# EUROPEAN PATENT SPECIFICATION

(11) **EP 0 931 712 B1**
(45) Date of publication and mention of the grant of the patent: **09.04.2003**
(21) Application number: 99101319.4
(22) Date of filing: 25.01.1999
(51) Int. Cl.: B62D 1/28, B62D 15/00

(54) **Automatic steering system in vehicle**
Automatisches Fahrzeuglenksystem
Système de direction automatique pour un véhicule

(30) Priority: 26.01.1998 JP 1226898
(43) Date of publication of application: 28.07.1999
(73) Proprietor: HONDA GIKEN KOGYO KABUSHIKI KAISHA, Minato-ku Tokyo (JP)
(72) Inventor: Kawashima, Mitsunori, Wako-shi, Saitama (JP); Nakamura, Hiroshi, Wako-shi, Saitama (JP); Tsurumiya, Osamu, Wako-shi, Saitama (JP)
(74) Representative: Prechtel, Jörg, Dipl.-Phys. Dr.

(56) References cited:
- DE-A- 19 648 943
- FR-A- 2 055 447
- US-A- 4 931 930
- PATENT ABSTRACTS OF JAPAN vol. 016, no. 245 (M-1260), 4 June 1992 (1992-06-04) -& JP 04 055168 A (HITACHI LTD), 21 February 1992 (1992-02-21)

## Description

### BACKGROUND OF THE INVENTION

### 1. FIELD OF THE INVENTION

The present invention relates to an automatic steering system in a vehicle for parking the vehicle automatically without recourse to a steering operation by a driver.

### 2. DESCRIPTION OF THE RELATED ART

Such automatic steering systems are already known from Japanese Patent Application Laid-Open Nos.3-74256 and 4-55168. The automatic steering systems for vehicles utilize an actuator for a conventionally well-known electric power steering device, and are designed so that a back parking and a linear parking are automatically carried out by controlling the actuator based on the relationship between a distance of movement of the vehicle and a reference steering angle which have previously been stored.

It may be necessary in some cases to discontinue an automatic steering control operation during reading of a stored locus of movement or during driving of the actuator based on the read locus of movement. To accommodate such cases, it is conceived that an automatic steering control operation discontinuing switch is mounted, and the automatic steering control operation is discontinued when a driver operates the automatic steering control operation discontinuing switch. However, if the special automatic steering control operation discontinuing switch is mounted, not only the number of parts is increased, but also it is difficult to select and immediately operate the automatic steering control operation discontinuing switch among a plurality of switches used for the automatic steering control operation and hence, there is a possibility that the automatic steering control operation cannot be discontinued immediately.

US-A-4,931,930 discloses an automatic steering system in accordance with the preamble of claim 1. There, an additional stop switch is necessary for stopping the operation of the system. FR-A-205 5 447 discloses a device for determining the length of a distance to be driven by a vehicle for parking in to a parking gap. The system is activated and deactivated by one single switch.

### SUMMARY OF THE INVENTION

Accordingly, it is an object of the present invention to ensure that an automatic steering control operation can be discontinued immediately and easily without provision of a special automatic steering control operation discontinuing means.

To achieve the above object, there is provided an automatic steering system in a vehicle in accordance with claim 1.

With the above arrangement, if any of the buttons is operated between the time point when the selecting means for selecting a desired one from the plurality of loci of movement is operated and the time point when the vehicle reaches the target position, the automatic steering control operation is discontinued. Therefore, the automatic steering control operation can be discontinued immediately and easily without provision of a special automatic steering control operation discontinuing means.

In a preferred embodiment, there is provided an automatic steering system in accordance with claim 2.

With the above arrangement, if any of the buttons is operated again between the time point when one of the buttons is operated and the time point when the indicating means for indicating the starting of the driving of the actuator based on the locus of movement is operated, the automatic steering control operation is discontinued. If at least one of the buttons and the indicating means is operated again between the time point when the indicating means is operated and the time point when the vehicle reaches the target position, the automatic steering control operation is discontinued. Therefore, the automatic steering control operation can be discontinued immediately and easily without provision of a special automatic steering control operation discontinuing means. Particularly, after the operation of the indicating means, the automatic steering control operation can be discontinued with operation of any one of the buttons and the indicating means. Therefore, the operation for discontinuing the automatic steering control operation is further facilitated.

The automatic steering control operation in the present invention is meant to include not only the driving of the actuator based on the locus of movement, but also the preprocessing such as the reading of the locus of movement of the vehicle to the target position.

The above and other objects, features and advantages of the invention will become apparent from the following description of the preferred embodiment taken in conjunction with the accompanying drawings.

### BRIEF DESCRIPTION OF THE DRAWINGS

Figs. 1 to 4 show an embodiment of the present invention, wherein
Fig.1 is an illustration of an entire arrangement of a vehicle provided with an automatic steering system;
Fig.2A is a diagram showing a locus of movement in a back parking/left mode;
Fig.2B is a diagram showing a reference steering angle in the back parking/left mode;
Fig.3 is a diagram showing a mode selecting switch and an automatic parking starting switch; and
Fig.4 is a flow chart of an automatic parking operation discontinuing program.

### DETAILED DESCRIPTION OF THE PREFERRED EMBODIMENT

The present invention will now be described by way of an embodiment with reference to the accompanying drawings.

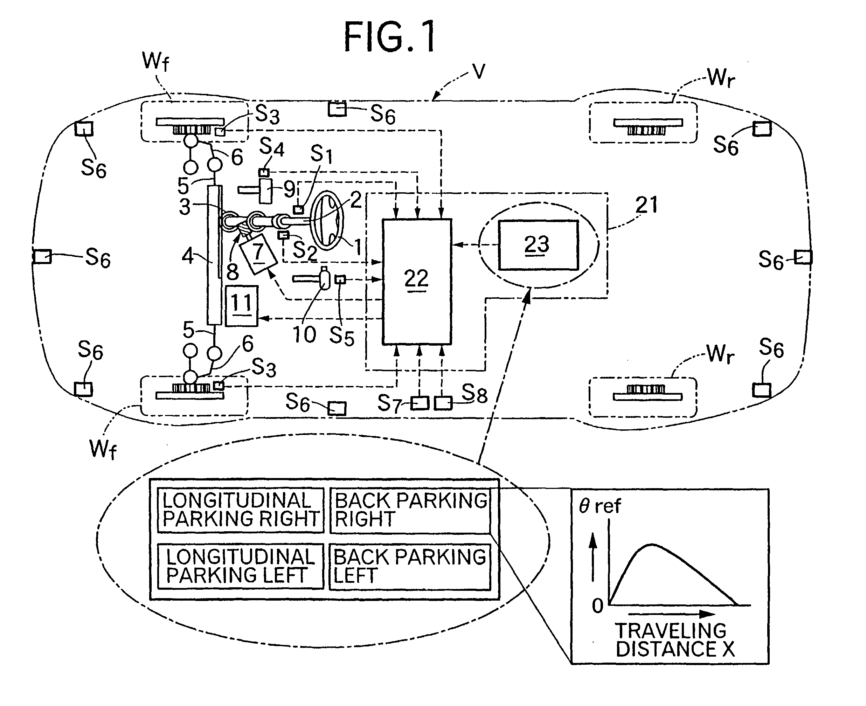

As shown in Fig.1, a vehicle V includes a pair of front wheels Wf, Wf, and a pair of rear wheels Wr, Wr. A steering wheel 1 and the front wheels Wf, Wf are connected to each other by a steering shaft 2 which are rotated with the steering wheel 1, a pinion 3 provided at a lower end of the steering shaft 2, a rack 4 meshed with the pinion 3, left and right tie rods 5 provided at opposite ends of the rack 4, and left and right knuckles 6. A steering actuator 7 comprising an electric motor is connected to the steering shaft 2 through a worm gear mechanism 8 in order to assist a driver in an operation of the steering wheel 1, or to conduct an automatic steering for garaging of the vehicle which will be described hereinafter.

A steering control unit 21 is comprised of a control section and a memory section 23. Inputted to the control section 22 constituting a control means of the present invention are signals from a steering angle detecting means S₁ for detecting a steering angle θ of the front wheels Wf, Wf based on a rotational angle of the steering wheel 1, a steering torque detecting means S₂ for detecting a steering torque of the steering wheel 1, front wheel rotational angle detecting means S₃, S₃ for detecting rotational angles of the left and right front wheels Wf, Wf, a brake operational amount detecting means S₄ for detecting an operational amount of a brake pedal 9, a shift position detecting means S₅ for detecting a shift position selected by a select lever 10 (a "D" position, an "R" position, an "N" position, a "P" position, or the like), and eight object detecting means S₆ mounted at a front portion, a central portion and a rear portion of the vehicle V. The object detecting means S₆ is comprised of publicly known sonar, radar, television camera or the like. Lines connecting the eight object detecting means S₆ and the control section 22 are not shown for the purpose of preventing the complication of the drawings.

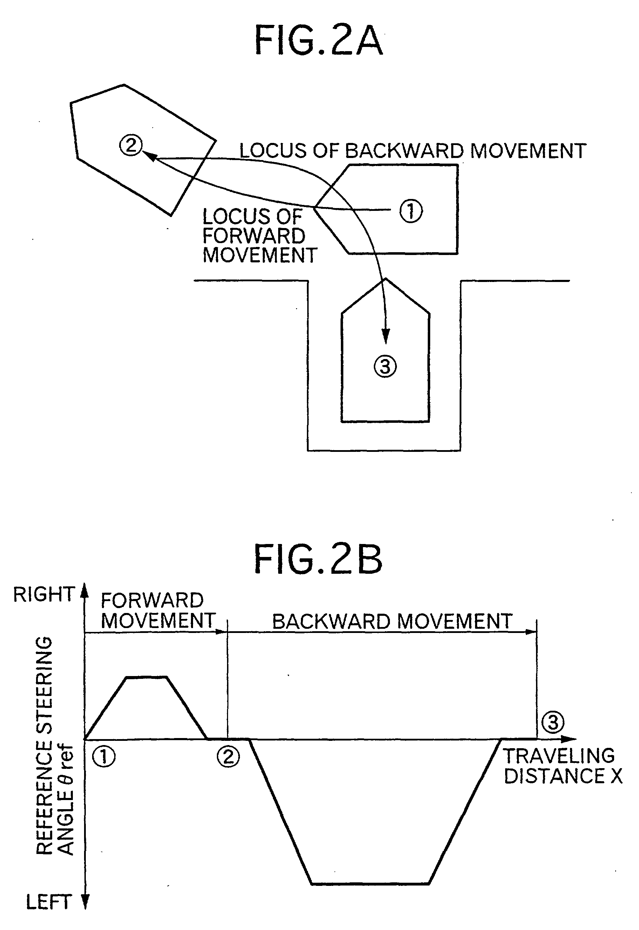

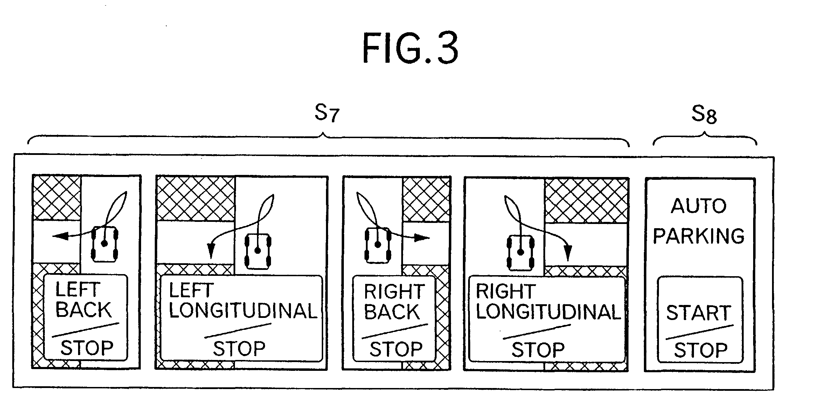

As can be seen by reference to Figs.1 and 2 in combination with Fig.3, a mode selecting switch S₇ operated by the driver and an automatic parking starting switch S₈ are connected to the control section 22 to conduct the automatic parking of the vehicle V. The mode selecting switch S₇ includes four buttons operated to select any of four parking modes, i.e., a back parking/right mode, a back parking/left mode, a longitudinal parking/right mode and a longitudinal parking/left mode. The automatic parking switch S₈ is operated when the driver starts to conduct the automatic parking according to any one of four parking modes selected by one of the mode selecting switches S₇. The mode selecting switch S₇ constitutes a selecting means of the present invention, and the automatic parking starting switch S₈ constitutes an indicating means of the present invention.

Data for the four parking modes are stored in advance as a table showing the relationship between the reference steering angle θref with respect to the traveling distance X of the vehicle V in the memory section 23 constituting a movement locus determining means of the present invention. The traveling distance X of the vehicle V is determined by multiplying the already-known circumferential length of the front wheel Wf by the rotational angle of the front wheel Wf, detected by the front wheel rotational angle detecting means S₃, S₃. To calculate the traveling distance X, a high selected value, a low selected value or an average value of the two values calculated on the basis of the outputs from the pair of left and right front rotational angle detecting means S₃, S₃ is used.

The control section 22 controls the operation of the steering actuator 7 and the operation of the operational stage display device 11 including a liquid crystal monitor, a loudspeaker, a lamp, a chime, a buzzer or the like, based on the signals from the various detecting means S₁ to S₆ and the switches S₇ and S₈ and the data for the parking modes stored in the memory section 23.

The operation of the embodiment of the present invention having the above-described arrangement will be described below.

In a normal operation (the mode selecting switch S₇ is not on), i.e., when automatic parking operation is not carried out, the steering control unit 21 functions as a general power steering control unit. More specifically, when the steering wheel 1 is operated by the driver to turn the vehicle V, the steering torque detecting means S₂ detects the steering torque inputted to the steering wheel 1, and the control section 22 controls the driving of the steering actuator 7. As a result, the left and right front wheels Wf, Wf are steered by the driving force from the steering actuator 7, whereby the steering operation by the driver is assisted.

The content of the automatic parking control operation will now be described taking as an example the back parking/left mode (mode in which the vehicle V is moved backwards to and parked in a parking position on the left of the vehicle V).

First, as shown in Fig.2A, the vehicle V is moved to a position in the vicinity of a garage in which the vehicle V is to be parked, and stopped in a position (starting position 1) in which a predetermined reference (for example, a mark provided inside a door or a left-hand side mirror) is aligned with a center line of the garage with the left side of the vehicle body as close as possible to an entrance line of the garage. Then, when the mode selecting switch S₇ is operated to select the back parking/left mode and the automatic parking starting switch S₈ is turned on, the control of the steering actuator 7 by the control section 22 is started. While the automatic parking control is carried out, the actual position of the subject vehicle, obstacles around the vehicle, the parking position, the predicted locus of movement of the subject vehicle from the starting position to a target position, and a reversing position in which the forward movement of the vehicle is changed to the backward movement thereof, are displayed on the operation stage display unit 11, and various kinds of instruction for the operation of the select lever 10 in the reversing position and warning are vocally from a loudspeaker to the driver.

When the driver loosens the brake pedal 9 to cause the vehicle V to creep through the automatic steering control, the front wheels Wf, Wf are automatically steered on the basis of the data for the back parking/left mode selected by one of the mode selecting switches S₇, even if the driver does not operate the steering wheel 1. Namely, while the vehicle V travels from the starting position 1 to the reversing position 2, the front wheels Wf, Wf are steered rightwards automatically, and while the vehicle V travels backwards from the reversing position 2 to the target position 3, the front wheels Wf, Wf are steered leftwards automatically.

As is clear from Fig.2B, while the automatic steering operation is carried out, the control section 22 calculates the deviation E (= θref - θ) on the basis of the reference steering angle θref in the back parking/left mode read from the memory section 23 and the steering angle θ inputted from the steering angle detecting means S₁, and controls the operation of the steering actuator 7 so that the deviation E becomes zero. In this case, since the data on the reference steering angle θref is set to correspond to the traveling distance X of the vehicle V, the vehicle V always travels along the above-described locus of movement, even if the creeping speed of the vehicle V is varied slightly.

The above-described automatic steering control operation is carried out while the vehicle V creeps with the brake pedal 9 depressed down by the driver. Therefore, when the driver has found an obstacle, the vehicle V can be immediately stopped by depression the brake pedal 9 by the driver.

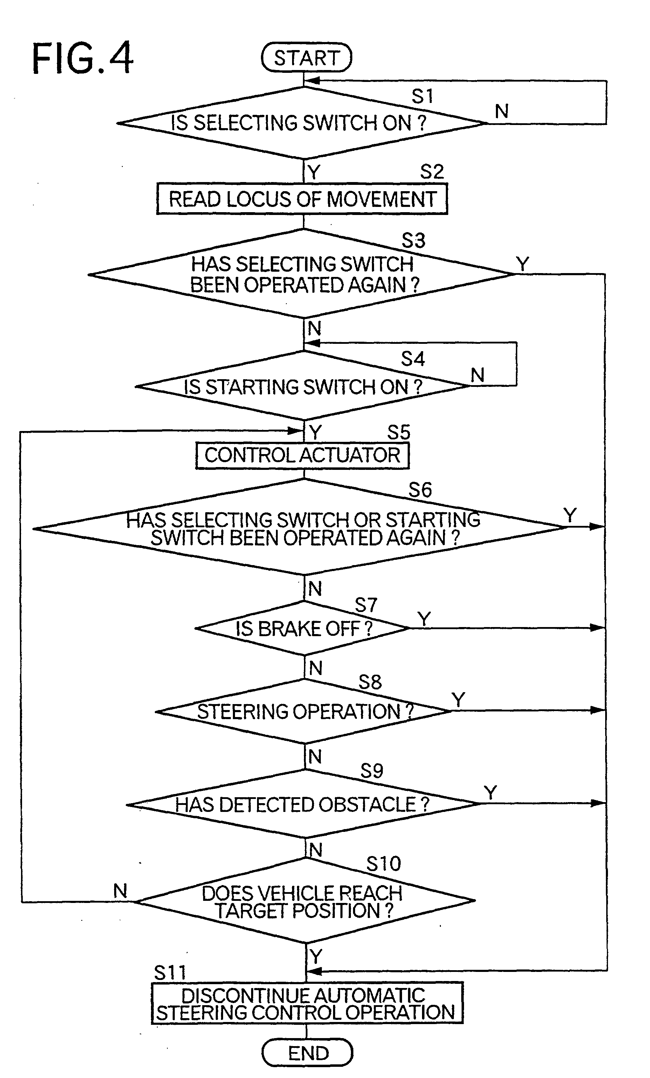

When the vehicle V has reached the target position 3, the automatic steering control operation is finished. In addition to this, when a predetermined condition is established, the automatic steering control operation is discontinued. The discontinuation of the automatic steering control operation will now be described with reference to the flow chart in Fig. 4.

First, if the driver pushes any one of the four mode selecting switches S₇ at Step S1, the pushed mode selecting switch S₇ is flushed on and off, and one of the data for the four parking modes stored in the memory section 23 which corresponds to the selected parking mode is read out in the control section 22 at Step S2. In this case, when the driver has pushed one of the mode selecting switches S₇ for the wrong mode other than the desired mode by mistake, or when the driver desires not to conduct the automatic parking operation in a change of his or her mind, if driver pushes any one of the four mode selecting switches S₇ (which may be either the switch flushed on and off, or the switch not flushed on and off) at Step S3, the switch flushed on and off is turned off, and the automatic steering control operation is discontinued at Step S11 and restored to a usual power-steering control operation. When the mode selecting switch S₇ for the wrong mode has been pushed, the correct mode selecting switch S₇ may be pushed again after restoring to the power-steering control operation.

If the re-operation of the mode selecting switches S₇ is not conducted at Step S3 and the driver pushes the automatic parking starting switch S₈ at Step S4, the switch flushed on and off is lit, and the control of the steering actuator 7 by the control section 22 is started at Step S5. When the driver becomes aware that he has pushed one of the mode selecting switches S₇ for the wrong mode after starting of the control of the steering actuator 7 at Step S5, or when the driver discontinues the automatic parking operation in a change of his or her mind, if the driver pushes any one of the five switches, i.e., the four mode selecting switches S₇ and the automatic parking starting switch S₈ at Step S6, the lit switch is turned off, and the automatic steering control operation is discontinued at Step S11 and restored to the usual power-steering control operation.

When the automatic steering control operation is being carried out without carrying-out of the re-operation of the mode selecting switches S₇ or the automatic parking starting switch S₈ at Step S6, if it is detected by the brake operational amount detecting means S₄ that the driver has released his or her foot from the brake pedal 9, the automatic steering control operation is discontinued at Step S11 and restored to the usual power-steering control operation. This is because the automatic steering control operation is carried out while causing the vehicle V to creep by depression of the brake pedal 9, and the driver has released his or her foot from the brake pedal 9 when the driver has desired to discontinue the automatic parking operation. Thus, the driver who has released his or her foot from the brake pedal 9 can immediately conduct the spontaneous steering operation without interference with the automatic steering control operation.

When it is detected by the steering torque detecting means S₂ at Step S8 that the driver has applied a steering torque equal to or larger than a predetermined value to the steering wheel 1, the automatic steering control operation is discontinued at Step S11 and restored to the usual power-steering operation. Thus, when the driver spontaneously operates the steering wheel 1 during the automatic steering control operation to keep out of an obstacle, the automatic steering control operation can be immediately discontinued.

When an obstacle which may possibly come into contact with the vehicle V is detected by the object detecting means S₆ at Step S9, the automatic steering control operation is discontinued at Step S11 and restored to the usual power-steering control operation. Thus, it is possible to reliably prevent the vehicle V from coming into contact with the obstacle.

The determinations at Steps S6 to S9 are continuously conducted until the vehicle V reaches the target position 3. When the vehicle V reaches the target position 3 without discontinuation of the automatic steering control operation, the automatic steering control operation is discontinued at Step S11 and restored to the usual power-steering control operation.

As described above, the automatic steering control operation can be discontinued only by re-operating the mode selecting switches S₇ or the automatic parking starting switch S₈. Moreover, the switch to be operated again is not a particular switch and may be any one of the plurality of switches and hence, the automatic steering control operation can be discontinued promptly and easily in case of emergency. In addition, a special switch for discontinuing the automatic steering control operation is not required and hence, the number of parts can be reduced.

For example, the locus of movement of the vehicle to the target position is stored in advance in the memory section 23 in the embodiment, but the locus of movement from the actual position of the vehicle and target position may be calculated.

Four mode selecting switches S₇ for selecting any of four parking modes and a starting switch S₈ for starting an automatic parking operation in the selected mode are connected to an automatic steering system. Between a time point when any one of the mode selecting switches S₇ is pushed and a time point when the starting switch S₈ is pushed, if any one of the four mode selecting switches S₇ is operated again, an automatic steering control operation is discontinued. In addition, between the time point when the starting switch S₈ is pushed and a time point when the vehicle reaches a target position, if any one of the four mode selecting switches S₇ and the starting switch S₈ is operated again, the automatic steering control operation is discontinued. Thus, the automatic steering control operation can be discontinued immediately and easily without provision of a special automatic steering control operation discontinuing device.

## Claims

1. An automatic steering system in a vehicle, comprising a movement locus determining means (23) adapted to store or calculate a plurality of loci of movement of the vehicle (V) to a target position, an actuator (7) adapted to steer a wheel (Wf), a control means (22) adapted to control the driving of said actuator (7) based on the loci of movement stored or calculated by said movement locus determining means (23), while the vehicle (V) is moved to the target position, and a selecting means (S₇) comprising a plurality of buttons corresponding to the plurality of loci of movement to be operated manually by an occupant to select a desired one from a plurality of loci of movement, **characterized in that** between a time point when one of said buttons is operated and a time point when the vehicle (V) reaches the target position, if any one of said buttons is operated after the one button had been operated, said control means (22) is adapted to discontinue an automatic steering control operation.

2. An automatic steering system in a vehicle, according to claim 1 comprising an indicating means (S₈) to be operated manually by the occupant to indicate the starting of the driving of said actuator (7) based on the locus of movement selected by said selecting means (S₇), wherein said control means (22) is adapted to discontinue the automatic steering control operation for a case in which between a time point when said selecting means (S₇) is operated and a time point when said indicating means (S₈) is operated, said selecting means (S₇) is operated after the one button had been operated, and for a case in which between said time point when said indicating means (S₈) is operated and a time point when the vehicle (V) reaches the target position, at least one of said selecting means (S₇) and said indicating means (S₈) is operated again.

## Patentansprüche

1. Automatisches Lenksystem in einem Fahrzeug, umfassend ein Ortskurven-Bestimmungsmittel (23), das zum Speichern oder Berechnen einer Mehrzahl von Ortskurven des Fahrzeugs (V) zu einer Zielposition ausgelegt ist, einen Aktuator (7), der zum Lenken eines Rads (Wf) ausgelegt ist, ein Steuermittel (22), das zum Steuern/Regeln der Ansteuerung des Aktuators (7) auf der Basis der von dem Ortskurven-Bestimmungsmittel (23) gespeicherten oder berechneten Ortskurve ausgelegt ist, während das Fahrzeug (V) zu der Zielposition bewegt wird, sowie ein Wählmittel (S₇), das eine Mehrzahl von den mehreren Ortskurven entsprechenden Knöpfen aufweist, die von einem Insassen manuell zu bedienen sind, um aus mehreren Ortskurven eine gewünschte auszuwählen,
**dadurch gekennzeichnet, dass** zwischen einem Zeitpunkt, wenn einer der Knöpfe betätigt wird, und einem Zeitpunkt, wenn das Fahrzeug (V) die Zielposition erreicht, falls irgendeiner der Knöpfe betätigt wird, nachdem der eine Knopf betätigt worden ist, das Steuermittel (22) dazu ausgelegt ist, den automatischen Lenksteuerbetrieb zu unterbrechen.

2. Automatisches Lenksystem in einem Fahrzeug-nach Anspruch 1, umfassend ein Indikatormittel (S₈), das von dem Insassen manuell zu bedienen ist, um den Ansteuerstart des Aktuators (7) auf der Basis der von dem Wählmittel (S₇) gewählten Ortskurve zu indizieren, worin das Steuermittel (22) dazu ausgelegt ist, den automatischen Lenksteuerbetrieb für einen Fall zu unterbrechen, in dem zwischen einem Zeitpunkt, wenn das Wählmittel (S₇) betätigt wird, und einem Zeitpunkt, wenn das Indikatormittel (S₈) betätigt wird, das Wählmittel (S₇) betätigt wird, nachdem der eine Knopf betätigt worden ist, und für einen Fall, in dem zwischen dem Zeitpunkt, wenn das Indikatormittel (S₈) betätigt wird, und einem Zeitpunkt, wenn das Fahrzeug (V) die Zielposition erreicht, zumindest eines des Wählmittels (S₇) und des Indikatormittels (S₈) erneut betätigt wird.

## Revendications

1. Système de direction automatique dans un véhicule, comprenant des moyens pour déterminer le lieu du mouvement (23) adaptés pour stocker ou calculer une pluralité de lieux de mouvement du véhicule (V) vers une position cible, un actionneur (7) adapté pour tourner une roue (Wf), des moyens de contrôle (22) adaptés pour contrôler l'entraînement dudit actionneur (7) basés sur les lieux de mouvement stockés ou calculés par lesdits moyens pour déterminer le lieu du mouvement (23) tandis que le véhicule (V) est mis en mouvement vers la position cible, et des moyens de sélection (S₇) comprenant une pluralité de boutons correspondant à la pluralité de lieux de mouvement à actionner de manière manuelle par un occupant pour sélectionner un lieu souhaité parmi une pluralité de lieux de mouvement, **caractérisé en ce qu'**entre un instant où l'un desdits boutons est actionné et un instant où le véhicule (V) atteint la position cible, si l'un quelconque desdits boutons est actionné après que le bouton a été actionné, lesdits moyens de contrôle (22) sont adaptés pour arrêter une opération de contrôle de direction automatique.

2. Système de direction automatique dans un véhicule, selon la revendication 1 comprenant des moyens d'indication (S₈) à actionner de manière manuelle par l'occupant pour indiquer le démarrage de l'entraînement dudit actionneur (7) basé sur le lieu du mouvement choisi par lesdits moyens de sélection (S₇), dans lequel lesdits moyens de contrôle (22) sont adaptés pour arrêter l'opération de contrôle de direction automatique pour un cas dans lequel entre un instant où lesdits moyens de sélection (S₇) sont actionnés et un instant où lesdits moyens d'indication (S₈) sont actionnés, lesdits moyens de sélection (S₇) sont actionnés après que le bouton a été actionné, et pour un cas dans lequel entre ledit instant où les moyens d'indication (S₈) sont actionnés et un instant où le véhicule (V) atteint la position cible, au moins l'un desdits moyens de sélection (S₇) et desdits moyens d'indication (S₈) est de nouveau actionné.
